(19) Europäisches Patentamt

European Patent Office

Office européen des brevets

(11) Veröffentlichungsnummer : **0 065 265**
**B1**

(12) **EUROPÄISCHE PATENTSCHRIFT**

(45) Veröffentlichungstag der Patentschrift :
09.01.85

(21) Anmeldenummer : 82104099.5

(22) Anmeldetag : 12.05.82

(51) Int. Cl.⁴ : **A 61 C   7/00**, F 16 F   1/02

(54) Federelement für kieferorthopädische Platten.

(30) Priorität : 20.05.81 DEU 8114926
30.07.81 DEU 8122384

(43) Veröffentlichungstag der Anmeldung :
24.11.82 Patentblatt 82/47

(45) Bekanntmachung des Hinweises auf die Patenterteilung : 09.01.85 Patentblatt 85/02

(84) Benannte Vertragsstaaten :
AT CH DE FR GB LI

(56) Entgegenhaltungen :
AT-B-   180 119
DE-A-    42 266
DE-A- 2 307 643
DE-B- 1 044 352
DE-B- 1 097 618
US-A- 3 849 885

(73) Patentinhaber : Lorenz, Wilhelm, Dr.
Am Wüllenberg 43
D-5277 Marienheide (DE)

(72) Erfinder : Lorenz, Wilhelm, Dr.
Am Wüllenberg 43
D-5277 Marienheide (DE)

(74) Vertreter : Patentanwälte Dipl.-Ing. W. Dahlke
Dipl.-Ing. H.-J. Lippert
Frankenforster Strasse 137
D-5060 Bergisch Gladbach 3 (DE)

**Beschreibung**

Die Erfindung betrifft ein Federelement für kieferorthopädische Platten zur Erzielung von sagittalen Zahnbewegungen im Seitenzahnbereich, insbesondere von Distalisationen. Die bekannten, herausnehmbaren Behandlungsgeräte bestehen aus einer Grundplatte und in diese eingebetteten Federelementen. Diese Federelemente dienen im wesentlichen der Verankerung der Platten, die fast nur für transversale Dehnungen der Kiefer verwendet werden Konnten. Diese Platten waren jedoch zur Distalisation von Molaren nur sehr beschränkt verwendbar, weil dabei immer mehr oder weniger reziproke Kräfte entstanden, die sich im wesentlichen nur mesial auswirkten. Selbst eine zusätzliche Verwendung von Sagittalschrauben brachte keine zufriedenstellende Lösung.

Der Erfindung liegt die Aufgabe zugrunde, die bekannten, herausnehmbaren kieferorthopädischen Platten so weiterzuentwickeln, daß man mit ihnen einen oder mehrere Zähne im Seitenzahnbereich in distaler Richtung verschieben kann. Diese Möglichkeit, einzelne Zähne oder auch ganze Zahngruppen zu verschieben, gestattet es, einen im übrigen Bereich des Zahnbogens bestehenden Platzmangel zu beseitigen.

Dabei ist es wichtig, daß die Federelemente keine Rotation der Zähne um ihre Achse und auch keine Kippungen der Zähne bewirken dürfen.

Die vorgenannte Aufgabe wird erfindungsgemäß dadurch gelöst, daß das Federelement eine doppelarmige Klammer aus einem elastischen, aber doch bleibend verformbaren Werkstoff ist, die einen Basisteil zum Einsetzen in die aus Kunststoff bestehende kieferorthopädische Platte und zwei von diesem Basisteil ausgehende Klammerarme umfaßt, deren erster als etwa U-förmiger Bügel ausgebildet ist und den benachbarten Zahn übergreift, und deren zweiter einen Schleifenteil aufweist, dessen einer Schenkel den zu verschiebenden Zahn übergreift und dessen anderer Schenkel den benachbarten Zahn übergreift, wobei die freien Enden der beiden Klammerarme verbreitert sind und zur Anlage an dem zu verschiebenden Zahn vorgesehen sind.

Vorzugsweise wird bei diesem erfindungsgemäßen Federelement vorgeschlagen, daß die verbreiterten freien Enden der beiden Klammerarme sichelförmig ausgebildet sind.

Das vorstehend beschriebene erfindungsgemäße Federelement kann einstückig ausgebildet sein.

Es wurde aber gefunden, daß eine zweistückige Ausbildung dieses in die Grundplatte einzusetzenden Federelementes gegenüber der einstückigen Ausführung Vorteile bietet, indem jetzt diese beiden Teile des Federelements auf dem Gipsmodell des Oberkiefers oder Unterkiefers mühelos in die richtige Lage gebracht werden können oder sich sogar von selbst in diese Lage begeben. Bei dem einstückigen Federelement sind zur optimalen Einstellung der beiden Klammerarme noch Biegearbeiten erforderlich, die jetzt vollständig oder weitgehend entfallen können.

Bei diesem zweiteiligen Federelement besteht der Basisteil aus zwei getrennten Teilen, die jeweils mit dem einen beziehungsweise anderen Klammerarm verbunden sind.

Der erstgenannte Klammerarm ist also mit seinem einen freien Ende in die Grundplatte eingebettet, verläuft dann auf der Innenseite der Zähne im Oberkiefer aufwärts beziehungsweise im Unterkiefer abwärts bis zur Kaufläche, knickt dann ab und verläuft oberhalb des Kontaktpunktes, um dann wiederum an der Außenseite des betreffenden Zahnes beziehungsweise des Zahnbogens abzuknicken und in Richtung auf die Zahn wurzel hin bis zum Zahnfleischrand zu verlaufen. Das freie Ende dieses Armes ist dann sichelförmig abgeflacht und legt sich approximal an den zu verschiebenden Zahn.

Es versteht sich, daß man zwei spiegelbildlich ausgebildete Federelemente benötigt, von denen eines für den rechten Oberkiefer sowie für den linken Unterkiefer verwendet werden kann, während man das zweite für den linken Oberkiefer und den rechten Unterkiefer benötigt.

Der vorgenannte Klammerarm ist von der Seite betrachtet, etwa U-förmig ausgebildet, wobei der eine Schenkel innerhalb und der andere außerhalb des Zahnbogens und das Mittelstück des U oberhalb des Kontaktpunktes von innen nach außen verläuft.

Entsprechend ist das eine Ende des anderen Klammerarms ebenfalls in die Grundplatte eingebettet und verläuft ebenfalls innerhalb des Zahnbogens in Richtung auf die Kaufläche, ebenfalls geneigt, wie vorstehend beschrieben, parallel zum ersten Klammerarm im Abstand von etwa 1 mm.

Beide Klammerarme treten in einer Ebene aus der Grundplatte hervor. Die abgewinkelte Stellung der Arme des Federelementes nach dem Hervortreten aus der Platte ist dadurch bedingt, daß die Federelemente in dieser Form gebogen sind, eine Änderung, die gegenüber der bisher beschriebenen Form erwähnt werden muß. Der Zweck dieser Abänderung liegt darin, daß nach dem Einsetzen des Federelementes in die Platte die auf 60° nach mesial abgewinkelten Klammerarme beide aufgebogen werden, so daß sie senkrecht zum Plattenrand vor dem Interdentalraum der ihnen zugeordneten Zähne stehen. Da das Federelement insgesamt etwas durch die Abwinklung nach mesial vom Interdentalraum verlagert war, befindet sich das Federelement nun in einer optimalen Position. Die durch diese Maßnahme veränderte Position der Enden des Federelements wird in der Weise korrigiert, daß dieselben nach distal tordiert werden soweit, daß eine Vorspannung in den Klammerarmen entsteht, die eine problemlose Distalisation der Zähne durch die Torsionselastizität ermöglicht.

Der Zweck der Maßnahme, die abgewinkelten Klammerarme nach Fertigstellung der Kieferorthopädischen Platte so zu biegen, daß sie senkrecht vor dem Interdentalraum stehen, ist aufgrund von Versuchen erfolgt, die einen sehr relevanten Effekt erkennen ließen.

Bei Federelementen, die von vornherein mit senkrechten Klammerarmen in die Platte eingearbeitet wurden, ergab sich im Verlauf der Behandlung, während welcher die zu bewegenden Zähne distal abwanderten, daß die abgeflachten Enden, die anfangs dem Zahn optimal anlagen, infolge des Drehmomentes der tordierten Klammerarme, immer weiter kauflächenwärts wanderten, wodurch in zunehmendem Maße eine Kippwirkung bei dem Zahn auftrat. Dazu kam, daß der Klammerarm sich mit seinem Ende immer mehr in einem Winkel zu dem zu bewegenden Zahn einstellte und nicht mehr flach dem Zahnhals anlag. Damit ließ auch die einwirkende Federkraft nach, und der Ablauf der Behandlung verlangsamte sich.

Ganz anders ist nun das Verhalten des erfindungsgemäßen Federelementes, bei dem mit abgewinkelten Klammerarmen gearbeitet wird. Nachdem die aus der Platte hervortretenden Klammerarme senkrecht aufgebogen und die Sichelanker in der erforderlichen Weise aktiviert worden sind, zeigte es sich, daß die sichelförmig abgeflachten Enden beider Arme des Federelementes ihre Anfangsposition während des Behandlungsverlaufs beibehielten. Sie wanderten also nicht kronenwärts und stellten sich auch nicht im spitzen Winkel zum Zahn ein, sondern sie lagen optimal am Zahnhals in Zahnfleischrandnähe und flach an der Zahnwand an, so daß die Federkräfte in der gewünschten Weise auf den Zahn einwirken. Modellversuche bestätigen den vorgenannten Effekt.

Bisher war eine Einbettung des Federelementes mit senkrecht aus der Platte hervortretenden Klammerarmen üblich und sie wurden auch den distalwärts abwandernden Zähnen durch Biegen nach distal nachgeführt. Der Weg bei dieser Biegung ist aber nur halb so groß, wie bei der vorhergenannten Methode mit nach mesial geneigten Klammerarmen. Dadurch war die Distalisation von Zähnen nicht in dem Umfange möglich, wie er oben beschrieben wurde.

Der zweite Klammerarm verläuft schließlich in Gestalt einer Haarnadelschleife, den ersten Klammerarm überbrückend, wieder zurück und dicht an der Kaufläche entlang, um dann, an deren innerer Kante, wieder in Richtung auf die Zahnwurzel bis zum Zahnfleischrand abzuknicken und in ein sichelförmig abgeflachtes Ende auszulaufen. Dieses Ende legt sich innerhalb des Zahnbogens an die Approximalfläche des zu verschiebenden Zahnes an. Somit wirken beide gemeinsam auf den zu verschiebenden Zahn ein, und es wird eine Verdrehung desselben verhindert.

Während der erstgenannte, etwa U-förmig ausgebildete Klammerarm, der mit seinem sichelförmig abgeflachten Ende außen am Zahn angreift, schon von sich aus eine ausreichende Länge, gemessen von der ihn haltenden Grundplatte bis zum abgeflachten Ende, besitzt und folglich die gewünschte Federwirkung entwickeln kann, wird eine ausreichende Länge des anderen Klammerarmes dadurch erreicht, daß man ihn in Form der genannten Haarnadelschleife von der Grundplatte aus zunächst über die Kaufläche der Zähne bis zur vorderen Kante und dann wieder zurück führt.

Dabei umgeben die beiden Schenkel des Schleifenteiles des letztgenannten Klammerarmes zweckmäßig den mehr oder weniger gerade über den Kontaktpunkt hinweg geführten ersten Klammerarm und legen sich jeweils beiderseits desselben auf die Kauflächen einerseits des zu verschiebenden und andererseits des diesem benachbarten Zahnes. Dadurch wird gleichzeitig ein sicherer Halt des gesamten Plattenbehelfs erzielt, insbesondere dann, wenn das buccale Ende des U-förmig ausgebildeten Klammerarms mit seiner Spitze möglichst weit interdental anliegt.

Die beiden das Federelement bildenden Klammerarme werden stets gemeinsam und paarweise verarbeitet, bilden also eine untrennbare Einheit, sind aber aus den eingangs genannten Gründen vor dem Einbetten in die Grundplatte noch in Längsrichtung, d. h. also in transversaler Richtung bezüglich des Zahnbogens, gegeneinander verschiebbar.

Die Erfindung wird anschließend in Ausführungsbeispielen näher erläutert. Dabei zeigen :

Figur 1 eine Ansicht auf die Kauflächen zweier benachbarter Zähne, deren einer durch den Plattenbehelf distal verschoben werden soll ;

Figur 2 einen Schnitt längs der Linie II-II in Fig. 1 und

Figur 3 eine vergrößerte Darstellung einer besonderen Ausführungsform des Federelementes, vor dem Einsetzen in die Platte.

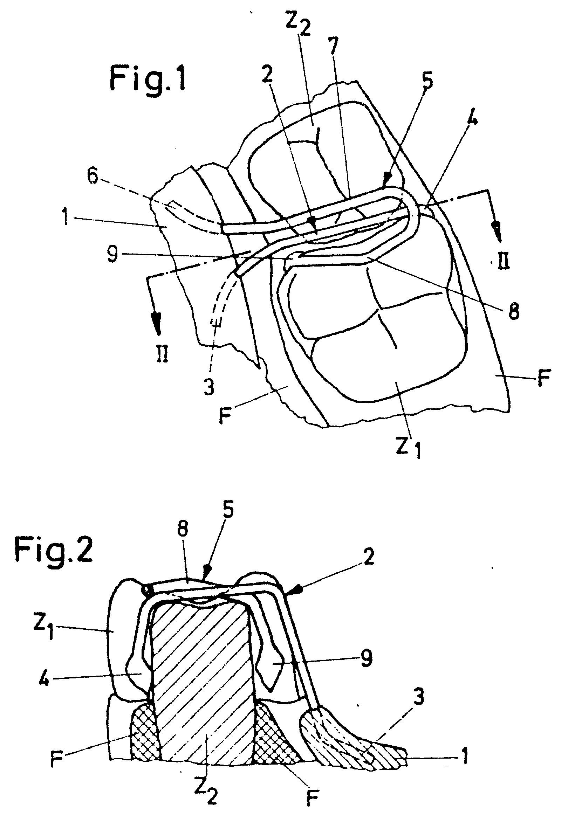

Die in Fig. 1 und Fig. 2 nur abgebrochen dargestellte Grundplatte 1, die innerhalb des Zahnbogens eingesetzt ist, besteht aus Kunststoff und ist so ausgebildet, daß sie sich saugend an die Mundschleimhaut des Oberkiefers oder Unterkiefers anlegt.

Der Plattenbehelf besteht aus der vorerwähnten Grundplatte und einem mit seinem Basisteil in diese eingebetteten Federelement aus Metalldraht, der elastisch, aber doch bleibend verformbar ist.

Das Federelement steht teils distal und teils mesial aus der Grundplatte vor und legt sich mit ihren Enden, wie nachstehend noch näher beschrieben wird, an einen zu verschiebenden Zahn $Z_1$. In Fig. 1 ist dieser Zahn sowie der ihm benachbarte Zahn $Z_2$, jeweils mit Blick auf die Kaufläche, dargestellt. Der Schnitt längs der Linie II-II verläuft in der Mitte noch teilweise durch den Nachbarzahn $Z_2$. Dieser geschnittene Bereich ist folglich in Fig. 2 schraffiert vereinfacht dargestellt. Das die Zähne umgebende Zahnfleisch F

ist in den Fig. 1 und 2 ebenfalls angedeutet.

Das Federelement besteht aus den beiden Klammerarmen 2 und 5, deren innerhalb des Zahnbogens liegende Endstücke 3 und 6 den Basisteil des Federelementes bilden und in die Grundplatte 1 eingebettet sind. Wie man sieht, sind die Endstücke divergierend ausgebildet, um die Verankerung in der Grundplatte zu verbessern und eine Bruchgefahr zu vermindern.

Der Klammerarm 2 erstreckt sich transversal über den Kontaktpunkt der beiden Zähne $Z_1$ und $Z_2$ hinweg bis zur Außenseite des zu verschiebenden Zahnes $Z_1$ und legt sich dort mit seinem sichelartig verbreiterten Ende 4 approximal gegen den Zahn $Z_1$. Das abgeknickte Ende des Klammerarmes 2 wird in distaler Richtung um einige Grade tordiert, so daß nur die Torsionselastizität des Klammerarmes seine Schubwirkung auf den Zahn ausübt.

Der andere Klammerarm 5 umfaßt einen Schleifenteil, dessen einer Schenkel 7 sich an das eingebettete Endstück 6 anschließt und längs der Kaufläche des Nachbarzahnes $Z_2$ verläuft, während der andere Schenkel 8, die Kaufläche des zu verschiebenden Zahnes $Z_1$ übergreifend und gegebenenfalls berührend, in die Verbreiterung 9 ausläuft. Auch hier wird, wie beim ersten Klammerarm, nur die Torsionselastizität des Klammerarmes ausgenutzt.

Somit wird der Zahn $Z_1$ durch die beiden Klammerarme über deren abgeflachte, sichelförmig verbreiterte Enden 4 und 9 gleichmäßig und ohne Verdrehung in distaler Richtung beaufschlagt und schließlich verschoben.

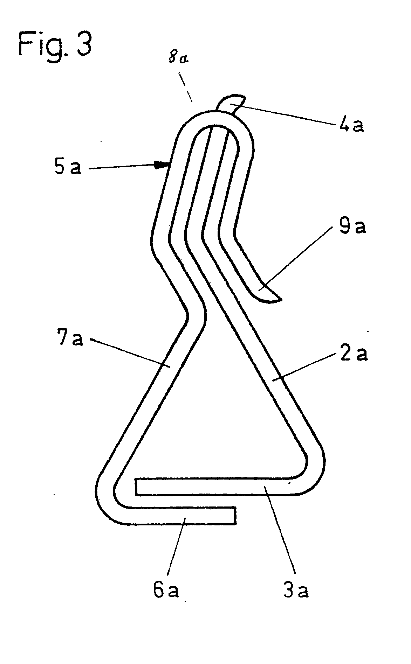

Fig. 3 zeigt eine verbesserte Ausführung des aus zwei Teilen bestehenden Federelementes, bei dem dieselben Bezugszeichen in den Figuren 1 und 2, jedoch mit einem zusätzlichen Index « a », verwendet werden.

Der eine Klammerarm 2a, der an seinem den Zahn übergreifenden Ende leicht abgeknickt und (nicht dargestellt) mit einer sichelförmigen Verbreiterung versehen ist, ist an seinem anderen, in den Kunststoff eingebetteten Ende 3a spitz abgewinkelt.

Der andere Klammerarm (7a) geht an seinem vorderen Ende in eine haarnadelförmige Schleife 8a über, deren freies Ende 9a wieder sichelförmig erweitert ist. An seinem anderen Ende ist dieser wieder unter einem spitzen Winkel abgewinkelt und dieses Ende 6a kommt beim Einsetzen und anschließenden Eingießen in Kunststoff etwa parallel zu dem Ende 3a des erstgenannten Klammerarmes in einem geringen Abstand von diesem zu liegen.

## Ansprüche

1. Federelement für kieferorthopädische Platten zur Erzielung von sagittalen Zahnbewegungen im Seitenzahnbereich, insbesondere von Distalisationen, dadurch gekennzeichnet, daß das Federelement eine doppelarmige Klammer (2, 5) aus einem elastischen, aber doch bleibend verformbaren Werkstoff ist, die einen Basisteil (3, 6) zum Einsetzen in die aus Kunststoff bestehende kiefer orthopädische Platte und zwei von diesem Basisteil (3, 6) ausgehende Klammerarme (2, 5) umfaßt, deren erster (2) als etwa U-förmiger Bügel ausgebildet ist und den benachbarten Zahn ($Z_2$) übergreift, und deren zweiter (5) einen Schleifenteil aufweist, dessen einer Schenkel (8) den zu verschiebenden Zahn ($Z_1$) übergreift und dessen anderer Schenkel (7) den benachbarten Zahn ($Z_2$) übergreift, wobei die freien Enden (4, 9) der beiden Klammerarme verbreitert sind und zur Anlage an dem zu verschiebenden Zahn ($Z_1$) vorgesehen sind.

2. Federelement nach Anspruch 1, dadurch gekennzeichnet, daß die verbreiterten freien Enden (4, 9) der beiden Klammerarme (2, 5) sichelförmig ausgebildet sind.

3. Federelement nach Anspruch 1 und 2, dadurch gekennzeichnet, daß es einstückig ausgebildet ist.

4. Federelement nach Anspruch 1 und 2, dadurch gekennzeichnet, daß sein Basisteil aus zwei getrennten Teilen (3a, 6a) besteht, die jeweils mit dem einen beziehungsweise anderen Klammerarm (2a, 5a) verbunden sind.

5. Federelement nach Anspruch 1 bis 4, dadurch gekennzeichnet, daß seine beiden Klammerarme nach dem Hervortreten aus dem Werkstoff der Platte in mesialer Richtung um 60° abgewinkelt und dann so gebogen sind, daß sie, senkrecht zum Plattenrand vor dem Interdentalspalt stehend, durch Torsion aktiviert sind.

## Claims

1. A spring element for orthodontic plates for achieving saggital tooth movements in the region of the side teeth, especially distalisations, characterized in that said spring element comprises clamping means (2, 5) with two arms, said clamping means being made of an elastic, but permanently deformable material and including a base part (3, 6) for inserting the same into the orthodontic plate made of plastic material, and a pair of clamping arms (2, 5) projecting from said base part (3, 6), the first one (2) of said clamping arms being designed as an approximately U-shaped yoke and engaging over the adjacent tooth ($Z_2$) while the other one of said arms (5) includes a loop part having one leg (8) engaging over the tooth ($Z_1$) to be shifted and a second leg (7) engaging over the adjacent tooth ($Z_2$), whereby the free ends (4, 9) of said clamping arms (2, 5) are broadened and are provided for engaging the tooth ($Z_1$) to be shifted.

2. A spring element according to claim 1, characterized in that the said broadened free ends (4, 9) of the said clamping arms (2, 5) are sickleshaped.

3. A spring element according to claims 1 and 2, characterized in that the said spring element is a one-piece element.

4. A spring element according to claims 1 and 2, characterized in that its base part consists of two separate parts (3a, 6a), each of which being connected with one or the other of said clamping arms (2a, 5a), respectively.

5. A spring element according to claims 1 through 4, characterized in that the two clamping arms are bent at an angle of 60° in mesial direction after projecting from the material of the plate and are then bent so that, being perpendicular to the plate edge in front of the interdental gap, they are activated by twisting the clamping arms.

### Revendications

1. Elément à ressort pour plaques d'orthopédie dento-faciale, en vue de l'obtention de déplacements sagittaux de dents dans la région des dents latérales et en particulier de distalisations, caractérisé en ce que cet élément à ressort est une agrafe à deux bras (2, 5) qui est faite d'un matériau élastique, mais néanmoins susceptible de déformation permanente et qui comprend une partie de base (3, 6) destinée à être encastrée dans la plaque d'orthopédie dento-faciale faite de matière synthétique et deux bras d'agrafe (2, 5) qui partent de cette partie de base (3, 6) et dont le premier (2) est réalisé sous la forme d'un étrier à peu près en U et recouvre la dent voisine ($Z_2$), tandis que le second (5) comprend une partie en forme de boucle dont l'une des branches (8) recouvre la dent à déplacer ($Z_1$) et dont l'autre branche (7) recouvre la dent voisine ($Z_2$), les extrémités libres (4, 9) des deux bras d'agrafe s'élargissant et étant agencées de manière à s'appliquer sur la dent à déplacer ($Z_1$).

2. Elément à ressort selon la revendication 1, caractérisé en ce que les extrémités libres élargies (4, 9) des deux bras d'agrafe (2, 5) sont réalisées en forme de croissant.

3. Elément à ressort selon la revendication 1 ou 2, caractérisé en ce qu'il est formé d'une seule pièce.

4. Elément à ressort selon la revendication 1 ou 2, caractérisé en ce que sa partie de base se compose de deux parties séparées (3a, 6a) qui sont reliées respectivement à l'un et à l'autre des bras d'agrafe (2a, 5a).

5. Elément à ressort selon l'une quelconque des revendications 1 à 4, caractérisé en ce qu'après leur sortie de la matière synthétique de la plaque, ses deux bras d'agrafe sont pliés d'un angle de 60° en direction médiale, puis ils sont courbés de telle manière qu'étant perpendiculaires au bord de la plaque avant l'espace interdentaire, ils soient rendus actifs par torsion.

Fig.1

Fig.2

Fig. 3

8a

4a

5a

9a

7a

2a

6a   3a